# EUROPÄISCHE PATENTSCHRIFT

(11) **EP 1 437 588 B1**
(45) Veröffentlichungstag und Bekanntmachung des Hinweises auf die Patenterteilung: **31.08.2005**
(21) Anmeldenummer: 03000394.1
(22) Anmeldetag: 10.01.2003
(51) Int. Cl.: G01N 22/00, G01N 22/04

(54) **Mikrowellen-Streufeldsensor**
Microwave stray field sensor
Détecteur de champ de dispersion des micro-ondes

(43) Veröffentlichungstag der Anmeldung: 14.07.2004
(73) Patentinhaber: AMS- Advanced Microwave Systems GmbH, 25336 Elmshorn (DE); Christian-Albrechts-Universität zu Kiel, 24098 Kiel (DE)
(72) Erfinder: Knöchel, Reinhard, 25336 Elmshorn (DE); Taute, Wolfgang, 24235 Laboe (DE); Döscher, Claas, 20253 Hamburg (DE)
(74) Vertreter: Wenzel & Kalkoff

(56) Entgegenhaltungen:
- EP-A- 0 908 718
- EP-A- 1 116 951
- WO-A-00/75645
- DE-A- 10 016 315
- DE-C- 19 729 730
- MIZIER M O: "MESURES D'HUMIDITE: POURQUOI PAS LES HYPERFREQUENCES?" MESURES REGULATION AUTOMATISME, CFE. PARIS, FR, Bd. 50, Nr. 1, 1985, Seiten 67-70, XP002057631 ISSN: 0755-219X
- DÖSCHER: "Die Dichte ist egal" PROCESS, Nr. 11, 2002, Seiten 44-45, WÜRZBURG
- DÖSCHER: "Moisture measurement goes electromagnetic" TOBACCO JOURNAL INTERNATIONAL, Nr. 5, 2002, Seiten 56-58, MAINZ

## Beschreibung

Die Erfindung betrifft eine Mikrowellen-Meßanordnung zur Messung der Feuchte, Dichte und/oder einer sonstigen dielektrischen Eigenschaft eines Produkts nach dem Oberbegriff von Anspruch 1.

Bei dem Streufeldsensor gemäß EP 0 288 135 B1 wird der Resonator von einer kreisringförmig in sich geschlossenen Mikrostreifenleitung gebildet. Ein anderer Streufeldsensor weist einen zylindrischen, mit Dielektrikum gefüllten Resonator mit einer mittigen Öffnung auf, bei dem sich eine stehende Welle entlang dem Umfang ausbildet (EP 0 908 718 A1). Um bei abstandsloser Messung einen Abrieb der dünnen metallischen Beschichtung, die den Mikrostreifenleiter (EP 0 288 135 B1) bzw. die die mittige Öffnung umgebende Stirnfläche (EP 0 908 718 A1) bildet, durch das Produkt zu vermeiden, ist es in der Praxis erforderlich, den Sensor an seiner dem Produkt zugewandten Seite mit einer schützenden abriebfesten Zwischenschicht zu versehen, die zur Befestigung an den Sensor angeklebt wird. Die zusätzliche Zwischenschicht und die Klebstoffschicht wirken sich nachteilig auf die Meßgenauigkeit aus, da ihr Einfluß auf das Meßsignal insbesondere bei Temperaturänderungen, die häufig durch das Produkt verursacht werden, kaum kompensierbar ist.

P. Jakkula und E. Tahkola, in: Sensors update, Band 7, Wiley VCH 2000, S. 211-232, beschreiben einen Mikrowellensensor mit einem ringförmigen, mit Dielektrikum gefüllten Wellenleiter, in dem fortschreitende Wellen zur Messung benutzt werden. Dies ist komplementär zu den stehenden Wellen eines Resonators. Der von Jakkula und Tahkola beschriebene Streufeldsensor ist in Ermangelung eines Resonators nicht gattungsgemäß.

Bei dem Mikrowellenresonator gemäß EP 0 889 321 A handelt es sich um einen im wesentlichen geschlossenen kreiszylindrischen, mit Dielektrikum gefüllten Resonator, der eine mittige Öffnung zur Probendurchleitung aufweist. Hierbei handelt es sich nicht um einen Streufeldsensor, da sich die Probe bei der Messung innerhalb des Resonators befindet. Insbesondere tritt hier die für Streufeldsensoren typische Problematik der Abstrahlung von Mi-krowellen nicht in vergleichbarem Maße auf. Es handelt sich daher um einen völlig andersartigen, nicht gattungsgemäßen Sensor.

Aus der DE 100 16 315 Al ist eine Mikrowellen-Meßvorrichtung zur Messung der Dicke einer Wasser- oder Eisschicht auf einer Oberfläche mit einem offenen dielektrischen Resonator beispielsweise in Form einer zylindrischen Keramikscheibe bekannt. Der dielektrische Resonator ist abgesehen von der offenen, dem zu messenden Belag zugewandten Seite metallisiert.

Die EP 1 116 951 A1 offenbart eine Messanordnung nach dem Oberbegriff von Anspruch 1.

Die Aufgabe der vorliegenden Erfindung besteht darin, die Meßgenauigkeit einer Mikrowellen-Meßanordnung insbesondere im Hinblick auf die Temperaturabhängigkeit zu verbessern.

Die Erfindung löst diese Aufgabe mit den Mitteln der Ansprüche 1 und 16.

Zunächst seien einige der verwendeten Begriffe erläutert.

Resonator bezeichnet einen Raumbereich, der so gestaltet und eingerichtet ist, daß sich bei der eingespeisten Mikrowellenfrequenz ein stehendes Mikrowellenfeld ausbildet. Damit ist der vorliegende Sensor von solchen nichtresonanten Sensoren abgegrenzt, bei denen die Reflexion und/oder Transmission einer laufenden, d.h. fortschreitenden Welle verwendet wird und bei denen daher die Anordnung so gestaltet und eingerichtet ist, daß sie möglichst effektiv die Ausbreitung einer fortschreitenden Welle ermöglicht. Weiterhin soll bei diesen bekannten Sensoren das Dielektrikum eine niedrigere Dielektrizitätszahl als das zu vermessende Produkt aufweisen, während dies im vorliegenden Fall im Hinblick auf geringe Abstrahlung vorzugsweise gerade umgekehrt ist. Weiterhin werden derartige bekannte Sensoren vorzugsweise zur Messung hoher Feuchten eingesetzt, während der erfindungsgemäße Sensor vorzugsweise zur Messung im Feuchtebereich von weniger als 85%, vorzugsweise weniger als 50%, weiter vorzugsweise weniger als 25% vorgesehen ist. Gegenüber einem mit fortschreitenden Mikrowellen betriebenen Sensor kann ein Aspekt der Erfindung darin gesehen werden, daß der Sensor mit einer Mikrowellenfrequenz gespeist wird, die einer Resonanz entspricht, um die Meßgenauigkeit bei der Messung an Produkten mit niedrigeren Feuchten zu verbessern.

Ein Streufeldresonator ist ein offener Resonator mit einem externen elektrischen Streufeld, das sich in den Produktraum hinaus erstreckt. Produktraum bezeichnet den Raumbereich, den ein zu vermessendes Produkt im Betrieb einnimmt. Offen ist ein Resonator, bei dem die Öffnung(en) den Feldverlauf nicht nur unwesentlich beeinträchtigen; er ist damit abgegrenzt von im wesentlichen geschlossenen Resonatoren, die sich auf der Grundlage eines entsprechenden vollständig geschlossenen Resonators beschreiben lassen. Externes Streufeld bedeutet, daß der Produktraum außerhalb des Resonators angeordnet ist. Bei einem ringförmigen Resonator verläuft das Produkt vorzugsweise nicht durch den Ring hindurch, sondern etwa senkrecht zur Ringachse an dem Ring entlang. Streufeldsensoren werden häufig bei flächigen Produkten, bspw. Furnierholz eingesetzt, ohne darauf beschränkt zu sein.

Um den Abrieb der gemäß EP0908718A1 vorgesehenen dünnen metallischen Beschichtungen auf der dem Produktraum zugewandten Seite des Dielektrikums zu verhindern, sieht die Erfindung einen Verzicht auf derartige dünne Leiter vor. Dem liegt die Erkenntnis zugrunde, daß ein eingangs genannter Resonator nicht zwingend einen solchen dünnen Leiter aufweisen muß, um einen meßtechnisch geeigneten Feldverlauf erzeugen zu können. Auf eine meßtechnisch nachteilige Zwischenschicht und ggf. vorgesehene Klebstoffschicht zwischen dem Produkt und dem Dielektrikum kann erfindungsgemäß verzichtet werden, was die Meßgenauigkeit insbesondere hinsichtlich der Temperaturabhängigkeit verbessert.

Die Erfindung ist insbesondere bei einem an dem Sensor vorbeilaufenden Produkt, beispielsweise einem kontinuierlichen Produktstrom von Bedeutung, bei dem eine erhöhte oder sogar ständige Reibung des Produkts am Sensor auftritt. Aus demselben Grund ist die Erfindung insbesondere für die Messung an festen Produkten von Bedeutung. Der erfindungsgemäße Sensor ist daher für den Einsatz an Produkten mit hoher Reibung geeignet.

Die Messung erfolgt vorzugsweise abstandslos, d.h. daß die dem Produktraum zugewandte Oberfläche des Dielektrikums ist ohne Abstand zum Produkt angeordnet, was die Meßgenauigkeit erheblich verbessert.

Vorzugsweise weist das Dielektrikum eine hohe Vickers-Härte von mindestens HV 20, weiter vorzugsweise mindestens HV 50 auf. Dadurch wird ein nachteiliger Abrieb des Dielektrikums durch das Produkt verhindert. Vickers-Härte ist eine gemäß DIN bestimmte Härteangabe, die auf der Eindrucktiefe eines mit einer Prüfkraft beaufschlagten spitzen Diamantkörpers beruht. Zur Verbesserung der Abriebfestigkeit beträgt die Härte des Dielektrikums vorzugsweise mindestens HV 100, weiter vorzugsweise mindestens HV 150, weiter vorzugsweise mindestens HV 200. Weiter bevorzugt im Hinblick auf Bearbeitbarkeit mit üblichem Werkzeug ist ein Härtebereich von mindestens HV 400, vorzugsweise mindestens HV 500. Wenn die Bearbeitbarkeit kein vorrangiges Kriterium ist, sind im Hinblick auf niedrigen Verschleiß noch höhere Härten von mindestens HV 800, vorzugsweise mindestens HV 1000 bevorzugt. Geeignete Materialien sind Keramiken, insbesondere teflonfreie Keramiken. Besonders geeignet ist Aluminiumoxid.

Feldmaximum bzw. -minimum bezeichnet einen lokalen Maximal-/Minimalwert der Amplitude des elektrischen oder magnetischen Mikrowellenfeldes. Je mehr Feldmaxima und -minima auf der auf der dem Produktraum zugewandten Oberfläche des Resonators vorhanden sind, desto geringer ist im allgemeinen die Abstrahlung aus der Resonatoröffnung hinaus, die sich insbesondere bei offenen Resonatoren nachteilig auf die Meßgenauigkeit auswirkt. Vorzugsweise weist daher das Mikrowellenfeld eines Typs auf der dem Produktraum zugewandten Oberfläche des Resonators jeweils mindestens drei, vorzugsweise jeweils mindestens fünf Feldmaxima und -minima auf. Dies kann auch im Hinblick auf die Erfassung eines größeren oder einheitlicheren Probenvolumens vorteilhaft sein.

Bevorzugt ist ein länglicher Resonator, bei dem bei gegebener Empfindlichkeit die Abstrahlung geringer sein kann als bei anderen Bauformen. Länglich heißt, daß der Resonator eine Längsachse aufweist und seine Ausdehnung entlang dieser Längsachse mindestens fünfmal, vorzugsweise mindestens zehnmal so groß ist wie in einer dazu senkrechten Richtung. Es finden dann mindestens eine, vorzugsweise mindestens drei, weiter vorzugsweise mindestens fünf Wellenlängen entlang dem Resonator Platz.

Die Anordnung der Feldmaxima und -minima "auf der dem Produktraum zugewandten Oberfläche des Resonators" grenzt den erfindungsgemäßen Resonator bspw. vom offenen Ende einer Koaxialleitung ab. Eine stehende Mikrowelle in einer Koaxialleitung weist zwar Feldmaxima und -minima entlang der Leitung auf, hat jedoch auf der Stirnfläche ihres offenen Endes einen gegebenen Amplitudenwert und weist daher auf dieser Stirnfläche kein erfindungsgemäßes Feldmaximum und -minimum auf.

Die Füllung des Resonators mit Dielektrikum, d.h. einer festen dielektrische Substanz mit einer Dielektrizitätszahl von größer als eins, verringert die meßtechnisch nachteilige Abstrahlung durch die Resonatoröffnung. Die Dielektrizitätszahl des Dielektrikums beträgt daher vorzugsweise mindestens 1.5, weiter vorzugsweise mindestens 4.

Die Erfindung wird im folgenden anhand vorteilhafter Ausführungsbeispiele unter Bezugnahme auf die beigefügten Figuren erläutert. Es zeigen:
- Fig. 1:: eine Querschnittsansicht eines Sensors mit kreisringförmigem Resonator;
- Fig. 2:: eine Draufsicht auf die Meßseite des in Fig. 1 gezeigten Sensors;
- Fig. 3:: eine Querschnittsansicht eines Sensors mit geradlinigem Resonator;
- Fig. 4:: eine Draufsicht auf die Meßseite des in Fig. 3 gezeigten Sensors;
- Fig. 5:: eine Querschnittsansicht eines weiteren Sensors mit kreisringförmigem Resonator;
- Fig. 6:: eine Querschnittsansicht eines weiteren Sensors mit kreisringförmigem Resonator;
- Fig. 7:: eine schematische Zeichnung einer Meßanordnung mit einem Sensor und einer Steuer- und Auswerteeinheit.

Der Sensor 1 besteht im wesentlichen aus einem plattenförmigen Träger 2, der eine ringförmige Rechtecknut 6 bzw. 6a, 6b, 6c aufweist, in die ein ringförmiges Dielektrikum 3 eingepaßt ist. Die Mikrowelleneinkopplung erfolgt über einen seitlichen Koaxialanschluß 4 und die Auskopplung über einen bezogen auf den Ring um 180° gegenüberliegenden Koaxialanschluß 5. Die Anschlüsse 4, 5 können in den Seitenwänden 6a, 6c oder im Boden 6b der Nut 6 angeordnet sein. Die Auskopplung 5 kann auch an einer beliebigen anderen Stelle, außer in einem Feldnulldurchgang erfolgen. Es kann auch der Anschluß 4 als Ein-.und Auskopplung verwendet werden. Das Dielektrikum 3 weist zur Aufnahme eines Mittelleiters der Anschlüsse 4, 5 zweckmäßigerweise eine entsprechende Bohrung auf. Die den Wänden 6a, 6b, 6c der Nut 6 gegenüberliegenden Oberflächen 12a, 12b, 12c des Dielektrikums 3 sind metallisiert; diese Metallisierungen bilden im vorliegenden Fall den Mikrowellenresonator 7. Das Verhältnis von Höhe h zu Breite b des Ringresonators beträgt im Hinblick auf Reduzierung der Abstrahlungsverluste vorzugsweise mindestens 1.5, weiter vorzugsweise mindestens 2.

Mikrowellen werden gemäß Fig. 7 in einem von einem Rechner 23 gesteuerten Generator 21 erzeugt, über ein Koaxialkabel zu dem Koaxialanschluß 4 geleitet und von dort über den Koaxial-Mittelleiter in den Resonator 7 eingespeist. Über einen entsprechenden Koaxialanschluß 5 wird ein Mikrowellensignal aus dem Resonator 7 ausgekoppelt und über ein Koaxialkabel einem Analysator 22 zugeführt, dessen Ausgangssignal vom Rechner 23 verarbeitet wird. Generator 21, Analysator 22 und Rechner 23 können in einer Auswerteeinheit 20 zusammengefaßt sein. Die vom Generator 21 erzeugte Frequenz des Mikrowellenfeldes ist so abgestimmt, daß sich in dem Resonator 7 eine stehende Welle mit mindestens einem Feldmaximum und einem Feldminimum für jeden Feldtyp ausbildet. Dies bedeutet jedoch nicht, daß die Frequenz ständig auf einem bestimmten Wert innerhalb der Resonanz festgehalten wird. Die Frequenz kann vielmehr im Bereich der Resonanz rechnergesteuert verfahren werden, um bspw. die Meßgrößen Resonanzbreite und Resonanzfrequenz ermitteln zu können.

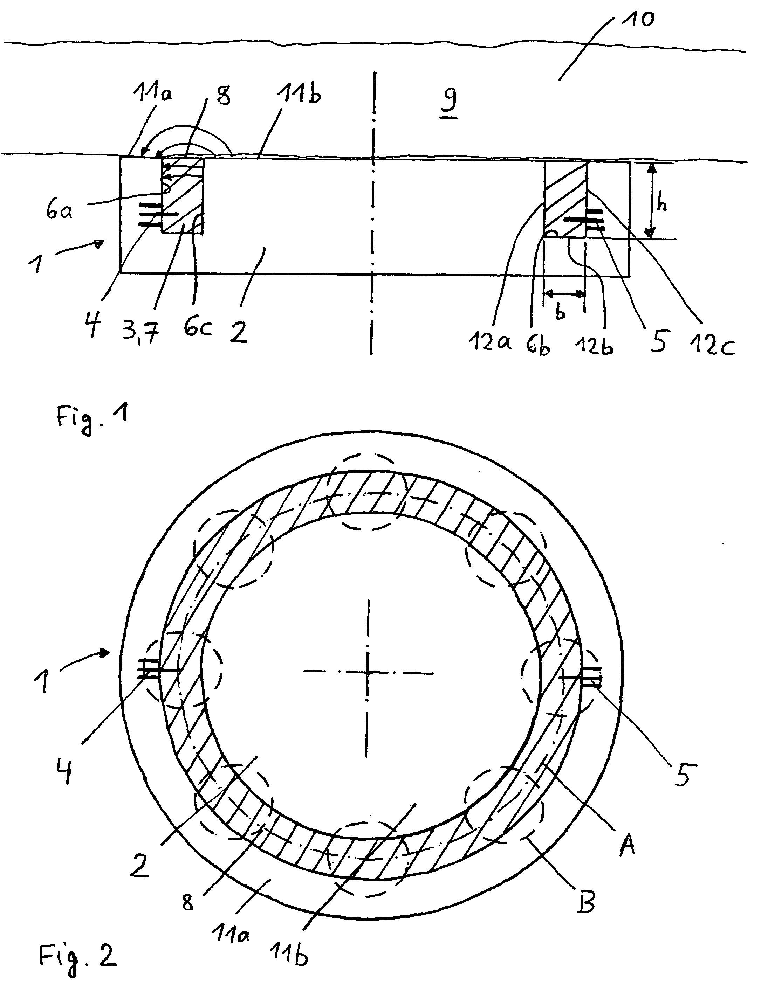

Im Beispiel der Fig. 2 finden vier Wellenlängen entlang der Längsachse A in dem Ringresonator 7 Platz. Dementsprechend weist das Feld entlang der Längsachse A jeweils alternierend vier Feldminima und -maxima auf. Den Feldminima und -maxima entsprechen die gestrichelt umrissenen Bereiche B, in denen die Feldintensität mehr als 50% des Maximalwerts beträgt (wobei dieser Bereich in der Realität nicht exakt kreisrund ist). Die Feldmaxima und -minima liegen jeweils etwa im Zentrum der gestrichelten Bereiche B.

Die Frequenz des Mikrowellenfelds liegt vorzugsweise oberhalb von 1 GHz, weiter vorzugsweise oberhalb von 2 GHz. Der Durchmesser des Rings aus dem Dielektrikum 3 entlang der strichpunktierten Längsachse A beträgt etwa 95 mm und ist damit bspw. für ein Dielektrikum mit einer typischen Dielektrizitätszahl von etwa 10, auf einen bevorzugten Frequenzbereich von etwa 1 bis 3 GHz ausgelegt, entsprechend einem Bereich von vier bis zehn Wellenlängen in dem Ringresonator 7. Es können daher je nach Anwendungsfall und gewünschter Empfindlichkeit unterschiedliche Resonanzen mit demselben Sensor verwendet werden.

Im Bereich der Feldextrema erstreckt sich das Feld durch eine Austrittsoberfläche, d.h. eine dem Produktraum 9 zugewandte Oberfläche 8 des Dielektrikums 3, in den Produktraum 9. Dieses elektrische Streufeld ist in Fig. 1 durch den Verlauf einiger Feldlinien angedeutet. In dem Produktraum 9 befindet sich das zu messende Produkt 10, beispielsweise eine Furnierholzplatte. Die Wechselwirkung des Feldes mit dem Produkt 10 verursacht eine Veränderung des durch den Koaxialanschluß 5 austretenden Mikrowellensignals, aus dem durch geeignete Auswertung ein mit der Feuchte oder Dichte des Produkts 10 korrelierendes Signal erhalten werden kann.

Das Dielektrikum 3 besteht beispielsweise aus Aluminiumoxid. Der Träger 2 besteht vorzugsweise aus Edelstahl oder einem anderen Metall mit einer Vickers-Härte von mindestens HV 100, vorzugsweise mindestens HV 150, weiter vorzugsweise mindestens HV 200, um hinreichend widerstandsfähig gegen Abrieb zu sein. Dies trifft zweckmäßigerweise mindestens auf den Teil des Trägers 2 zu, der die dem Produktraum 9 zugewandte Oberfläche 11a, 11b des Trägers 2 bildet. Daher besitzt die gesamte dem Produktraum 9 zugewandte Oberfläche 8, 11 des Sensors 1 eine ausreichend große Härte, so daß das Produkt 10 keinen nachteiligen Abrieb an dieser Oberfläche verursacht. Im übrigen, d.h. im Abstand von der dem Produktraum 9 zugewandte Oberfläche 11a, 11b des Trägers 2, kann dieser auch, bspw. aus Gewichtsgründen, aus Kunststoff bestehen. Vorzugsweise weisen der Träger 2 und das Dielektrikum 3 vergleichbare, d.h. um weniger als 10% verschiedene Temperaturausdehnungskoeffizienten auf.

Im Beispiel der Fig. 1 füllt das Dielektrikum 3 die gesamte Nut 6 des Trägers 2 vollständig und paßgenau aus. "Paßgenau" bedeutet im Rahmen der vorliegenden Anmeldung, daß das Dielektrikum 3 insoweit ohne Abstand zu dem Träger 2 angeordnet ist. In diesem Sinne ist es auch zu verstehen, wenn davon die Rede ist, daß das Dielektrikum 3 "in den Träger 2 eingepaßt" ist. Aufgrund der Passung des Dielektrikums 3 in dem Träger 2 wird das Auftreten von Zwischenräumen vermieden, in denen sich Verunreinigungen oder Substanzen ablagern können, die das Meßsignal verfälschen können.

Vorzugsweise fluchtet die dem Produktraum 9 zugewandte Oberfläche 8 des Dielektrikums 3 mit entsprechenden angrenzenden Oberflächen 11a, 11b des Trägers 2. Dies hat ebenfalls den Vorzug, daß keine nachteiligen Vorsprünge oder Vertiefungen in der dem Produktraum zugewandten Oberfläche 8, 11 des Sensors 1 entstehen, an denen sich das Meßsignal verfälschende Ablagerungen bilden können. Die dem Produktraum 9 zugewandte Oberfläche 8, 11a, 11b des Sensors ist daher eine vollständig geschlossene Fläche. Diese Fläche ist vorzugsweise im wesentlichen eben. Sie wird vorzugsweise vollständig von miteinander fluchtenden Oberflächen des Dielektrikums 3 und des Trägers 2 gebildet.

Das Dielektrikum 3 ist einstückig bzw. einschichtig (weiter vorzugsweise vollständig aus demselben Material), wodurch das Auftreten eines die Meßgenauigkeit beeinträchtigenden Spalts zwischen Teilen des Dielektrikums verhindert wird. Aus demselben Grund sind die seitlichen Oberflächen 12a, 12c und der Boden 12b des Dielektrikums 3 metallisiert, damit kein Spalt zwischen dem Dielektrikum und dem Träger 2 auftritt. Aufgrund der metallisierten Oberflächen 12a, 12b, 12c des Dielektrikums 3 ist dieses bis auf seine dem Produktraum 9 zugewandte Oberfläche 8 vollständig gegen nachteilige Abstrahlung von Mikrowellen abgeschirmt. Dies wäre auch ohne die.metallisierten Oberflächen 12a, 12b, 12c aufgrund des metallischen Trägers 2 der Fall. An den metallisierten Oberflächen 12a, 12b, 12c kann das Dielektrikum mit dem Träger 2 verklebt sein, ohne daß sich die Klebeschicht auf das Meßsignal auswirkt, da sie sich jedenfalls weitestgehend außerhalb des felderfüllten Raumes befindet. Es kann zu diesem Zweck ausreichen, wenn eine der Oberflächen 12a, 12b, 12c metallisiert ist.

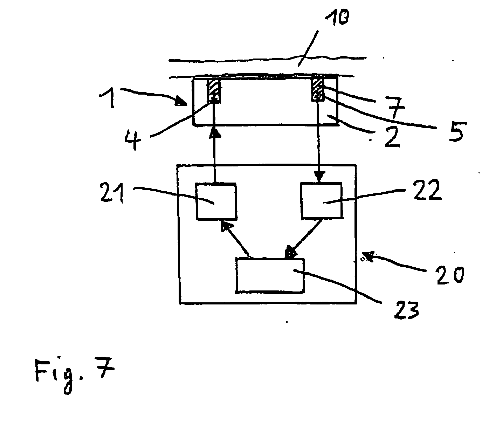

Demgegenüber ist der Resonator 7 auf seiner dem Produktraum zugewandten Seite vollkommen offen, d.h. die dem Produktraum zugewandten Oberfläche 8 des Dielektrikums ist frei von jeglichen, d.h. nicht nur dünne Mikrowellenabschirmungen. Überraschenderweise hat sich gezeigt, daß dies nicht zu einer übermäßigen, d.h. die Meßgenauigkeit beeinträchtigenden Erhöhung der Mikrowellenabstrahlung führt. Wie aus Fig. 6 ersichtlich sind jedoch auch nicht-dünne Abschirmungen, hier der Kragen 16 des Trägers 2, auf der dem Produktraum zugewandten Oberfläche 8, 12g des Dielektrikums 3 mit umfaßt, da sich aufgrund der Dicke d des Kragens 16 von mehr als 0.1 mm, vorzugsweise mehr als 0.2 mm, weiter vorzugsweise mehr als 1 mm ein geringfügiger Abrieb nicht nachteilig auswirkt. Nicht-dünne Abschirmungen können jedoch eine herstellungsaufwendigere Formung des Dielektrikums 3 verursachen.

Im Beispiel der Fig. 1, 2 ist der Resonator 7 kreisringförmig in sich geschlossen. Die Kreisringform ist im Hinblick auf minimale Abstrahlung bevorzugt, da sich die Feldmaxima und -minima im Fernfeld größtenteils kompensieren. Da diese Kompensation mit der Anzahl der Feldmaxima und -minima zunimmt, beträgt deren Anzahl vorzugsweise jeweils mindestens drei, weiter vorzugsweise jeweils mindestens fünf. Andererseits nimmt die Eindringtiefe der Mikrowellen in den Produktraum und damit die Empfindlichkeit mit der Anzahl der Feldmaxima und -minima ab. Je nach gewünschter Empfindlichkeit beträgt daher die Anzahl der Feldmaxima und -minima vorzugsweise jeweils höchstens 10, weiter vorzugsweise jeweils höchstens acht.

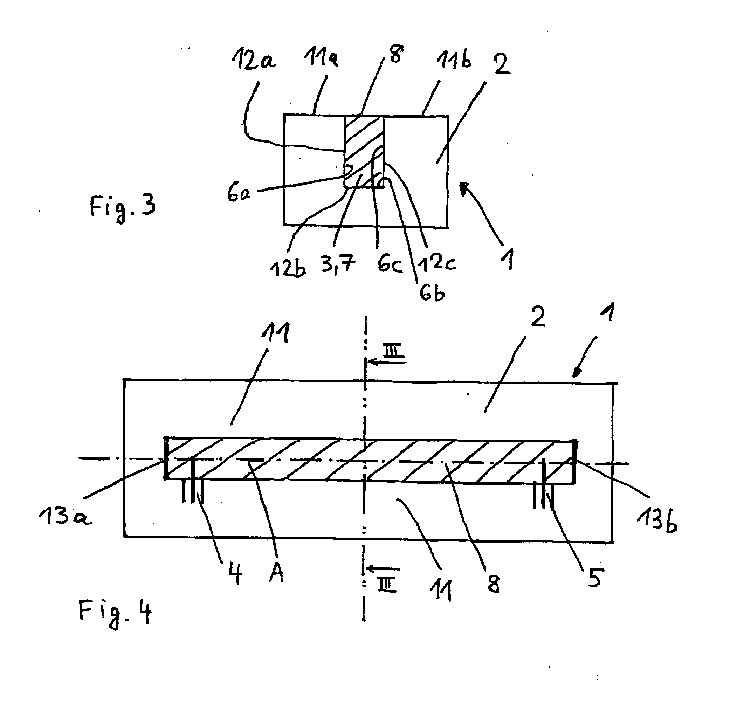

Beliebige andere ringförmige Anordnungen, bspw. oval, dreieckig, quadratisch, rechteckig, im allgemeinen mehreckig, auch mit abgerundeten Ecken, sind ebenfalls umfaßt. Es sind auch nicht in sich geschlossene Anordnungen umfaßt. Fig. 3, 4 zeigen bspw. einen geradlinigen Resonator 7. Die Enden 13a, 13b des Resonators 7 sind vorzugsweise elektrisch kurzgeschlossen, um nachteilige Antennenabstrahlung zu vermeiden; auch elektrisch leerlaufende Enden sind umfaßt. Andere nicht in sich geschlossene Resonatorformen sind ebenfalls umfaßt, beispielsweise ein (nicht gezeigter) in einer Draufsicht analog Fig. 2, 4 U-förmiger Resonator mit zweckmäßigerweise kurzgeschlossenen Enden. Die Flexibilität hinsichtlich der Form des Resonators erlaubt eine optimale Anpassung an die jeweilige Einbausituation.

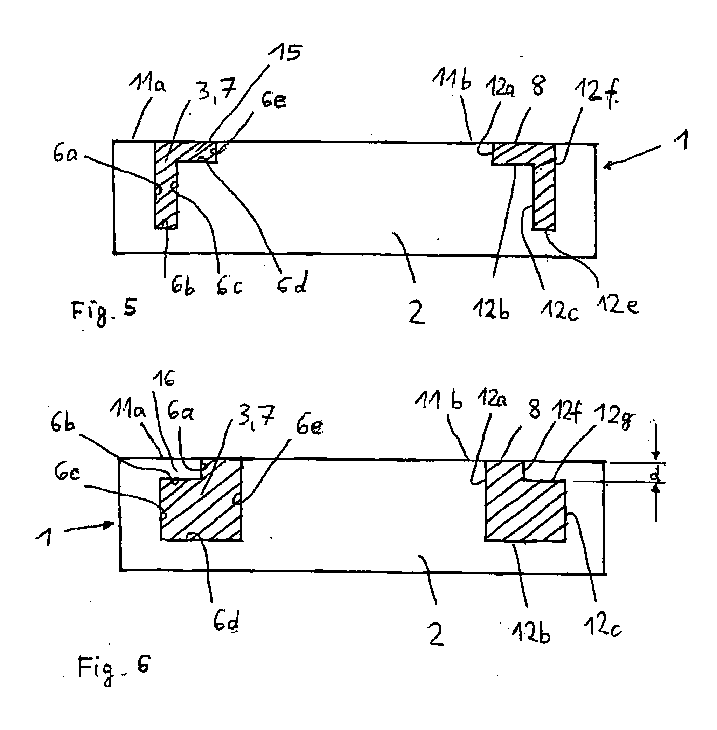

Die Ausführungsbeispiele der Fig. 5 und 6 verdeutlichen, daß auch andere Formen der Nut 6 in dem Träger 2 umfaßt sind. Im Beispiel der Fig. 5 weist das Dielektrikum an seinem dem Produktraum 9 zugewandten Ende einen Kragen 15 auf, der einen entsprechenden, durch die Oberflächen 6d, 6e begrenzten Fortsatz der Nut 6 bedingt. Diese Bauform weist gegenüber derjenigen aus Fig. 1 eine Empfindlichkeitsverminderung auf. Im Beispiel der Fig. 6 weist der Träger 2 an seinem dem Produktraum 9 zugewandten Seite einen Kragen 16 auf, der eine entsprechende, durch die Oberflächen 6a, 6b begrenzten Einschnürung der Nut 6 bzw. des Dielektrikums 3 bedingt. In den Beispielen der Fig. 5,6 treten zusätzliche metällisierte Oberflächen 12e, 12f, 12g des Dielektrikums 3 und zusätzliche Oberflächen 6d, 6e der Nut 6 in dem metallischen Träger 2 auf.

Durch Veränderung der Tiefe, Breite oder Form der Nut 6 läßt sich die Empfindlichkeit des Sensors 1 in weiten Bereichen wie gewünscht einstellen. Es können auch mehrere parallel betriebene Nuten 6 vorgesehen werden.

## Patentansprüche

1. Meßanordnung zur Messung der Feuchte, Dichte und/oder einer sonstigen dielektrischen Eigenschaft eines Produkts (10), mit einem Mikrowellen-Streufeldsensor (1), der einen mit Dielektrikum (3) gefüllten Mikrowellenresonator (7) umfaßt, einem Generator (21) zur Erzeugung des Mikrowellenfeldes, wobei die Frequenz des Generators (21) auf eine Resonanzfrequenz des Resonators (7) abgestimmt ist, so daß sich in dem Resonator (7) ein stehendes Mikrowellenfeld mit mindestens einem Feldmaximum und einem Feldminimum auf der dem Produktraum (9) zugewandten Oberfläche des Resonators (7) ausbildet, wobei aus dem Resonator (7) durch mindestens eine Öffnung Mikrowellenstrahlung in einen Produktraum (9) austritt, um mit dem darin befindlichen Produkt (10) in Wechselwirkung zu treten, und mit einer Auswerteeinheit (20), die zu einer geeigneten Auswertung eines aus dem Resonator (7) ausgekoppelten Signals zur Ermittlung der Feuchte, Dichte und/oder einer sonstigen dielektrischen Eigenschaft des Produkts (10) eingerichtet ist, wobei das Dielektrikum (3) ohne Zwischenschicht zum Produktraum (9) angeordnet ist und an seiner dem Produktraum zugewandten Oberfläche (8, 12g) frei von Metallisierungen mit einer Dicke von höchstens 0.1 mm ist,
und wobei der Mikrowellensensor (1) einen Träger (2) umfasst, wobei die dem Produktraum (9) zugewandte Oberfläche des Mikrowellensensors (1) zwischen dem Träger (2) und dem Dielektrikum (3) zwischenraumfrei gebildet ist,
**dadurch gekennzeichnet dass**
der Resonator (7) vollständig mit dem Dielektrikum (3) gefüllt ist.

2. Meßanordnung nach Anspruch 1, **dadurch gekennzeichnet, daß** das Dielektrikum (3) aus einem Material mit einer Vikkers-Härte von mindestens HV 20 besteht.

3. Meßanordnung nach Anspruch 1 oder 2, **dadurch gekennzeichnet, daß** das Dielektrikum (3) in den Träger (2) eingepaßt ist.

4. Meßanordnung nach Anspruch 3, **dadurch gekennzeichnet, daß** der Träger (2) metallisch, vorzugsweise aus Edelstahl ist.

5. Meßanordnung nach Anspruch 3 oder 4, **dadurch gekennzeichnet, daß** der Träger (2) zur Aufnahme des Dielektrikums (3) mit einer Nut (6) versehen ist.

6. Meßanordnung nach Anspruch 5, **dadurch gekennzeichnet, daß** die Nut (6) im Querschnitt U-förmig ist.

7. Meßanordnung nach einem der Ansprüche 3 bis 6, **dadurch gekennzeichnet, daß** die an den Produktraum (9) angrenzende Oberfläche (8) des Dielektrikums (3) mit einer benachbarten Oberfläche (11a, 11b) des Trägers (2) fluchtet.

8. Meßanordnung nach einem der Ansprüche 3 bis 7, **dadurch gekennzeichnet, daß** eine Oberfläche (6a, 6b, 6c) des Dielektrikums (3), die mit einer metallischen Oberfläche (12a, 12b, 12c) des Trägers (2) zusammenwirkt, metallisiert ist.

9. Meßanordnung nach einem der Ansprüche 1 bis 8, **dadurch gekennzeichnet, daß** das Dielektrikum (3) einstückig ist.

10. Meßanordnung nach einem der Ansprüche 1 bis 9, **dadurch gekennzeichnet, daß** das Dielektrikum (3), abgesehen von seiner dem Produktraum (9) zugewandten Oberfläche (8, 12g), vollständig gegen das Austreten von Mikrowellen abgeschirmt ist.

11. Meßanordnung nach einem der Ansprüche 1 bis 10, **dadurch gekennzeichnet, daß** die dem Produktraum (9) zugewandte Oberfläche (8) des Dielektrikums (3) frei von jeglichen Mikrowellenabschirmungen ist.

12. Meßanordnung nach einem der Ansprüche 1 bis 11, **dadurch gekennzeichnet, daß** das Dielektrikum (3) eine höhere Dielektrizitätszahl als das zu vermessende Produkt (10) aufweist.

13. Meßanordnung nach einem der Ansprüche 1 bis 12, **dadurch gekennzeichnet, daß** das Dielektrikum (3) eine Dielektrizitätszahl von mindestens 1.5, vorzugsweise mindestens 4 aufweist.

14. Meßanordnung nach einem der Ansprüche 1 bis 13, **dadurch gekennzeichnet, daß** der Mikrowellenresonator (7) und/oder das Dielektrikum (3) ringförmig, vorzugsweise kreisringförmig in sich geschlossen ist.

15. Meßanordnung nach einem der Ansprüche 1 bis 14, **dadurch gekennzeichnet, daß** das Mikrowellenfeld auf der Austrittsoberfläche (8) des Dielektrikums (3) jeweils mindestens drei, vorzugsweise jeweils mindestens fünf Feldmaxima und - minima aufweist.

16. Verfahren zur Messung von Materialeigenschaften mittels einer Meßanordnung nach einem der Ansprüche 1 bis 15,
wobei der Mikrowellenresonator (7) mit einer Frequenz betrieben wird, die einer Resonanzfrequenz des Mikrowellenresonators (7) entspricht.

## Claims

1. Measurement apparatus for measuring the humidity, density and/or another dielectric property of a product (10), comprising a microwave stray-field sensor (1) which comprises a microwave resonator (7) filled with dielectric material (3), a generator (21) for generating the microwave field, the frequency of the generator (21) being tuned to a resonance frequency of the resonator (7) such that in the resonator (7) a standing microwave field with at least one field maximum and one field minimum is formed on the surface of the resonator (7) facing the product space (9), wherein microwave radiation leaks out of the resonator (7) through at least one opening into a product space (9) in order to interact with the product (10) present therein, and comprising a processing unit (20) adapted to suitably process a signal coupled out of said resonator (7) in order to determine the humidity, density and/or another dielectric property of the product (10), wherein the dielectric material (3) is arranged to the product space (9) without any layer in between and is free of any metallic coating with a thickness of at most 0.1 mm on its surface (8, 12g) facing the product space (9), and wherein the microwave sensor (1) comprises a support (2), the surface of said microwave sensor (1) facing the product space (9) being formed free of any gap between said support (2) and said dielectric material (3), **characterized in that** said resonator (7) is completely filled with said dielectric material (3).

2. Measurement apparatus according to claim 1, **characterized in that** said dielectric material (3) is a material with a Vikkers hardness of at least HV 20.

3. Measurement apparatus according to claim 1 or 2, **characterized in that** said dielectric material (3) is fitted into said support (2).

4. Measurement apparatus according to claim 3, **characterized in that** said support (2) is metallic, preferably of highgrade steel.

5. Measurement apparatus according to claim 3 or 4, **characterized in that** said support comprises a groove (6) for receiving said dielectric material (3).

6. Measurement apparatus according to claim 5, **characterized in that** said groove (6) has the form of a U in a sectional view.

7. Measurement apparatus according to one of claims 3 to 6, **characterized in that** the surface (8) of the dielectric material (3) adjacent to said product space (9) is aligned with an adjacent surface (11a, 11b) of said support (2).

8. Measurement apparatus according to one of claims 3 to 7, **characterized in that** a surface (6a, 6b, 6c) of said dielectric material (3) interacting with a metallic surface (12a, 12b, 12c) of said support (2) is coated with metal.

9. Measurement apparatus according to one of claims 1 to 8, **characterized in that** said dielectric material (3) is a single piece.

10. Measurement apparatus according to one of claims 1 to 9, **characterized in that** said dielectric material (3) is completely shielded against leakage of microwave to the outside apart from its surface (8, 12g) facing said product space (9).

11. Measurement apparatus according to one of claims 1 to 10, **characterized in that** the surface (8) of the dielectric material (3) facing the product space (9) is free of any metallic coating.

12. Measurement apparatus according to one of claims 1 to 11, **characterized in that** the dielectric number of the dielectric material (3) is higher than that of the product (10) on which the measurement is to be performed.

13. Measurement apparatus according to one of claims 1 to 12, **characterized in that** the dielectric number of the dielectric material (3) is at least 1.5, preferably at least 4.

14. Measurement apparatus according to one of claims 1 to 13, **characterized in that** said microwave resonator (7) and/or said dielectric material (3) is formed in a closed loop, preferably in a circular closed loop.

15. Measurement apparatus according to one of claims 1 to 14, **characterized in that** the microwave field comprises at least three, preferably at least five field maxima and corresponding field minima on the surface (8) of the dielectric material (3) where the field leaks out.

16. Method for measuring material properties with a measurement apparatus according to one of claims 1 to 15, **characterized in that** the microwave resonator is operated at a frequency corresponding to a resonance frequency of the microwave resonator (7).

## Revendications

1. Dispositif de mesurage de l'humidité, de la densité et/ou d'une autre propriété diélectrique d'un produit (10), comportant un détecteur de champ de dispersion de micro-ondes (1) équipé d'un résonateur de micro-ondes (7) rempli d'un diélectrique (3), comportant un générateur (21) produisant le champ de micro-ondes, dans lequel la fréquence du générateur (21) est réglée sur une fréquence de résonance du résonateur (7), de façon à ce que, dans le résonateur (7), un champ de micro-ondes stationnaire comportant au moins une valeur de champ maximale et une valeur de champ minimale est constitué sur la surface du résonateur (7) orientée vers le compartiment (9) du produit, moyennant quoi un rayonnement de micro-ondes est émis à partir du résonateur (7) au travers d'au moins une ouverture dans un compartiment (9) du produit pour interagir avec le produit (10) s'y trouvant, et comportant une unité d'évaluation (20) configurée pour une évaluation appropriée d'un signal découplé du résonateur (7) pour la détermination de l'humidité, de la densité et/ou d'une autre propriété diélectrique du produit (10), le diélectrique (3) étant disposé sans couche intermédiaire vers le compartiment (9) du produit et sa surface (8, 12g) orientée vers le compartiment du produit ne présentant aucune métallisation et ayant une épaisseur maximale de 0,1 mm, et dans lequel le détecteur des micro-ondes (1) comporte un support (2), la surface du détecteur des micro-ondes (1) orientée vers le compartiment (9) du produit étant constituée sans espace intermédiaire entre le support (2) et le diélectrique (3), **caractérisé en ce que** le résonateur (7) est complètement rempli par le diélectrique (3).

2. Dispositif de mesurage selon la revendication 1, **caractérisé en ce que** le diélectrique (3) est constitué d'un matériau présentant une dureté Vickers d'au moins HV 20.

3. Dispositif de mesurage selon la revendication 1 ou 2, **caractérisé en ce que** le diélectrique (3) est disposé dans le support (2).

4. Dispositif de mesurage selon la revendication 3, **caractérisé en ce que** le support (2) est métallique, le métal étant de préférence de l'acier inoxydable.

5. Dispositif de mesurage selon la revendication 3 ou 4, **caractérisé en ce que** le support (2) dans lequel est disposé le diélectrique (3) est pourvu d'un évidement (6).

6. Dispositif de mesurage selon la revendication 5, **caractérisé en ce que** l'évidement (6) présente une section transversale en forme de U.

7. Dispositif de mesurage selon l'une des revendications 3 à 6, **caractérisé en ce que** la surface (8) du diélectrique (3) contiguë au compartiment (9) du produit est alignée avec une surface voisine (11a, 11b) du support (2).

8. Dispositif de mesurage selon l'une des revendications 3 à 7, **caractérisé en ce qu'**une surface (6a, 6b, 6c) du diélectrique (3) interagissant avec une surface métallique (12a, 12b, 12c) du support (2) est métallisée.

9. Dispositif de mesurage selon l'une des revendications 1 à 8, **caractérisé en ce que** le diélectrique (3) est constitué d'une seule pièce.

10. Dispositif de mesurage selon l'une des revendications 1 à 9, **caractérisé en ce que** le diélectrique (3) est entièrement masqué à l'exposition de micro-ondes, mis à part sa surface (8, 12g) orientée vers le compartiment (9) du produit.

11. Dispositif de mesurage selon l'une des revendications 1 à 10, **caractérisé en ce que** la surface (8) du diélectrique (3) orientée vers le compartiment (9) du produit ne comporte aucun masquage aux micro-ondes.

12. Dispositif de mesurage selon l'une des revendications 1 à 11, **caractérisé en ce que** le diélectrique (3) présente une constante diélectrique plus élevée que celle du produit (10) à mesurer.

13. Dispositif de mesurage selon l'une des revendications 1 à 12, **caractérisé en ce que** le diélectrique (3) présente une constante diélectrique d'au moins 1,5 et préférablement d'au moins 4.

14. Dispositif de mesurage selon l'une des revendications 1 à 13, **caractérisé en ce que** le résonateur de micro-ondes (7) et/ou le diélectrique (3) présente une forme annulaire et préférablement annulaire fermée.

15. Dispositif de mesurage selon l'une des revendications 1 à 14, **caractérisé en ce que** le champ de micro-ondes présente respectivement au moins trois maxima de champ et minima de champ et préférablement cinq maxima de champ et minima de champ sur la surface de sortie (8) du diélectrique (3).

16. Méthode de mesurage de propriétés d'un matériau au moyen d'un dispositif de mesurage selon l'une des revendications 1 à 15, dans laquelle le résonateur de micro-ondes (7) est alimenté par une fréquence correspondant à une fréquence de résonance du résonateur de micro-ondes (7).
